# DEMANDE DE BREVET EUROPEEN

(11) **EP 0 701 349 A1**
(43) Date de publication de la demande: **13.03.1996**
(21) Numéro de dépôt: 95202378.6
(22) Date de dépôt: 04.09.1995
(51) Int. Cl.: H04L 12/56

(54) **Système et noeud de transmission de données avec surveillance de l'engorgement**

(30) Priorité: 07.09.1994 FR 9410724
(71) Demandeur: T.R.T. TELECOMMUNICATIONS RADIOELECTRIQUES ET TELEPHONIQUES, F-75013 Paris (FR); PHILIPS ELECTRONICS N.V., NL-5621 BA Eindhoven (NL)
(72) Inventeur: Salingre, Daniel, Société Civile S.P.I.D., F-75008 Paris (FR); Davoult, Armel, Société Civile S.P.I.D., F-75008 Paris (FR)
(74) Mandataire: Chaffraix, Jean

(57) **Abrégé**

Dans un tel système des accès à un réseau commuté sont habituellement prévus comme secours en cas de panne.

Selon l'invention, les flux de données correspondant à des applications de transfert de fichier sont séparés de ceux qui correspondent à du trafic transactionnel et chaque noeud (N1 à N4) est doté d'une fonction de surveillance de l'engorgement des liaisons (L1 à L3) pour mesurer la charge générée par les applications locales de transfert de fichier, et basculer au moins une communication sur le réseau commuté lorsque ladite charge est supérieure à un niveau prédéterminé (P1).

Applications: notamment à l'interconnexion de réseaux locaux via un réseau étendu de type X25.

## Description

La présente invention concerne un système de transmission de données comportant une pluralité de noeuds reliés entre eux par des liaisons pour établir des communications relatives au moins à des applications de transfert de fichier et à des applications transactionnelles, certains de ces noeuds étant dotés d'au moins un accès à un réseau commuté.

L'invention a d'importantes applications notamment dans le domaine de l'interconnexion de réseaux locaux par l'intermédiaire de réseaux étendus de type X25 par exemple.

En effet, l'utilisation de tels réseaux pour l'interconnexion de réseaux locaux modifie la nature des flux de données transportés par le réseau. Au trafic transactionnel classique s'ajoute alors un trafic de transfert de fichier. Le problème qui se pose alors est celui de l'écoulement de ces deux types de trafic sans surdimensionnement de la capacité des liaisons.

Pour cela, il est connu notamment du protocole multi-liaison défini dans la recommandation X25 du CCITT, d'utiliser une ou plusieurs liaisons d'un réseau commuté prévu habituellement pour le secours, afin de répartir l'ensemble du trafic d'une liaison momentanément engorgée. Cette méthode présente toutefois plusieurs inconvénients. D'une part, il s'agit d'un traitement local de l'engorgement qui devra donc être répété sur chaque tronçon de liaison entre le noeud source et le noeud destinataire. D'autre part, ce traitement porte sur l'ensemble du trafic et donc en particulier sur le trafic transactionnel. Or le fait de dérouter le trafic transactionnel a pour conséquence d'interrompre la communication pendant un court instant, et donc d'entraîner une gêne au niveau de l'utilisateur.

L'invention a pour but de proposer un système de transmission de données qui remédie à ces inconvénients.

Pour cela un système de transmission de données selon l'invention et tel que défini dans le paragraphe introductif est caractérisé en ce que chacun de ces noeuds comporte:
- des moyens de séparation de flux pour établir des communications distinctes pour des applications de transfert de fichier et pour des applications transactionnelles,
- des moyens pour former un groupe d'au moins une communication correspondant à une application locale de transfert de fichier,
- des moyens de mesure de la charge générée par ledit groupe,
- des moyens pour basculer au moins partiellement ledit groupe sur le réseau commuté lorsque ladite charge est supérieure à un niveau dit niveau haut, et tant qu'elle reste supérieure à un niveau dit niveau bas.

Dans un mode de réalisation particulièrement avantageux d'un système de transmission de données selon l'invention, pour basculer au moins partiellement ledit groupe sur le réseau commuté, chacun desdits noeuds comporte:
- des moyens pour établir une connexion de bout en bout entre les noeuds source et destinataire,
- fermer les communications correspondantes,
- rétablir lesdites communications sur le réseau commuté.

L'invention concerne également un noeud, et plus particulièrement un commutateur X25, destiné à être utilisé dans un tel système.

D'autres particularités, détails et avantages de la présente invention apparaîtront dans la description qui va suivre en regard des dessins annexés qui sont donnés à titre d'exemple non limitatif et dans lesquels:
- la figure 1 représente schématiquement un exemple de système de transmission selon l'invention,
- la figure 2 est un graphique explicitant le principe utilisé pour mesurer la charge,
- la figure 3 représente sous une autre forme le système de transmission de la figure 1,
- la figure 4 représente un exemple de noeud selon l'invention.

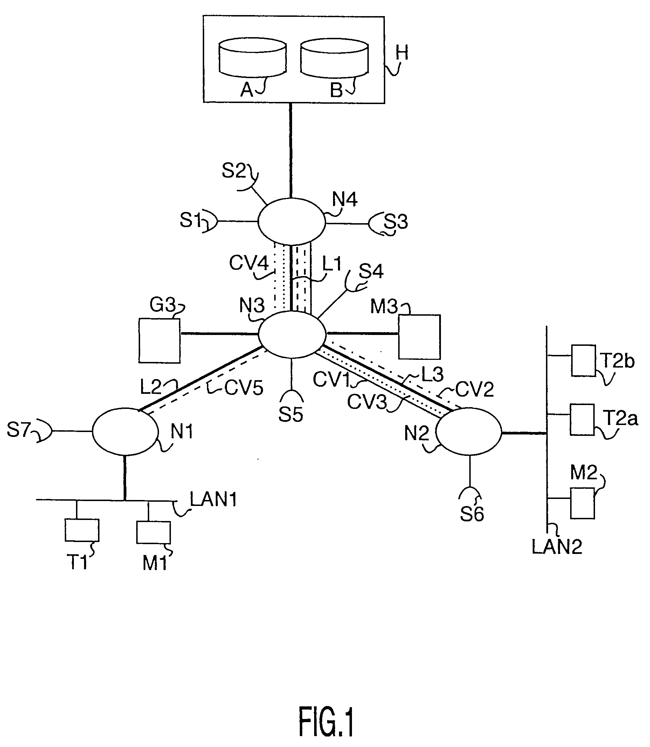

D'après la figure 1 un système de transmission de données selon l'invention comporte une pluralité de noeuds N1, N2, N3 et N4, les noeuds N1 et N3, N2 et N3, et N3 et N4 étant respectivement reliés entre eux par des liaisons spécialisées L2, L3 et L1. Le système ainsi représenté à titre d'exemple sur cette figure 1 constitue un réseau bancaire. Le noeud N4 relie au réseau un serveur H à partir duquel plusieurs bases de données A et B sont disponibles pour traiter des applications de transfert de fichier ou des applications transactionnelles. Ce noeud N4 est par ailleurs doté de trois accès S1, S2 et S3 à un réseau commuté prévu pour le secours en cas de panne d'un noeud ou d'une liaison. Le noeud N3 est doté de deux accès S4 et S5 au dit réseau commuté, et il est directement relié à un distributeur de monnaie M3 et à un guichet G3. Les noeuds N2 et N1 enfin sont chacun dotés d'un accès S6 et respectivement S7 au dit réseau commuté. Ils relient chacun un réseau local LAN1 et respectivement LAN2 sur lesquels sont connectés des distributeurs de monnaie M1 et respectivement M2, et des terminaux de gestion des comptes clients T1 et respectivement T2a et T2b.

Dans cet exemple de réalisation le réseau formé par les quatre noeuds N1, N2, N3 et N4 est un réseau de type X25 et le réseau commuté de secours est un réseau de type RNIS. Toutefois l'invention est applicable à d'autres types de réseaux (Relais de trames, réseau téléphonique commuté...)

Selon l'invention, les flux de données correspondant à des applications de transfert de fichier et les flux de données correspondant à des applications transactionnelles doivent être séparés, de telle sorte que chaque noeud puisse mesurer, pour les communications pour lesquelles il joue le rôle de noeud source, la charge correspondant aux applications de transfert de fichier. Pour cela des adresses différentes sont attribuées aux différentes applications qu'elles résident ou non sur une même machine. Lorsque les applications résident sur des machines différentes, leur adresse réseau est par nature différente. Dans le cas contraire, l'adresse réseau commune aux différentes applications doit être distinguée au niveau applicatif.

Dans un réseau X25 les adresses appelantes et appelées se composent d'au plus 15 chiffres décimaux. Les réseaux n'utilisent en général pas la totalité de ces emplacements pour coder les adresses appelantes et appelées. Dans un mode de réalisation avantageux, l'invention utilise les emplacements restants pour coder les adresses au niveau applicatif.

A titre d'exemple, le réseau français Transpac n'utilise que 9 emplacements pour coder ses adresses. Dans le cas où l'on accède au noeud N4 par l'intermédiaire du réseau Transpac, "123456789" étant l'adresse du noeud N4 sur le réseau Transpac, et "10" étant le numéro de la liaison de sortie du noeud N4 vers le serveur H, l'adresse des applications de transfert de fichier (base de données A) s'écrit par exemple 123456789-10-08, où "08" correspond au numéro de la base de donnée A. Et, l'adresse des applications transactionnelles (base de données B) s'écrit 123456789-10-09 où "09" correspond au numéro de la base de données B.

De même, dans le cas où l'ensemble des noeuds du système appartiennent à un réseau privé de numéro "2080" par exemple, si le numéro du noeud N4 sur ce réseau est "30", l'adresse des applications de transfert de fichier s'écrit 2080-30-10-08, et l'adresse des applications transactionnelles s'écrit 2080-30-10-09.

Ainsi, en se reportant à la figure 1, trois circuits virtuels différents CV1, CV2 et CV3 sont respectivement ouverts suite à un appel du distributeur M2 vers la base de données B pour vérifier si la carte qu'il est en train de traiter fait partie du fichier des cartes volées, et suite à un appel des terminaux T2a et T2b vers la base de données A pour faire une recherche parmi les fichiers clients. Ces trois circuits virtuels transitent physiquement sur les mêmes liaisons, les liaisons L1 et L3.

De plus, toujours d'après la figure 1, un circuit virtuel CV4 est également établi entre les noeuds N3 et N4 suite à une demande de transfert de fichier du guichet G3 vers la base de données A. Et un circuit virtuel CV5 est établi entre les noeuds N1 et N4 suite à une demande de transfert de fichier du terminal T1 vers la base de données A.

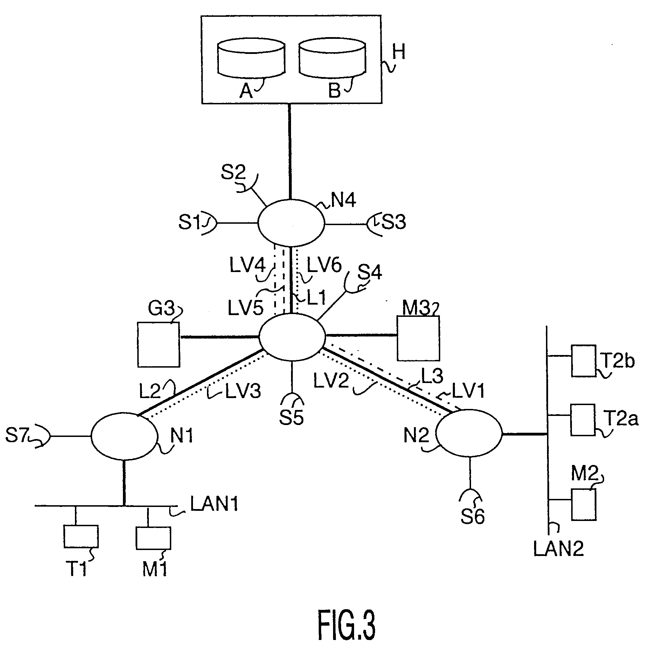

Dans le mode de réalisation décrit par la suite, chaque noeud est doté de moyen de mesure de la charge globale des applications de transfert de fichier pour lesquelles il joue le rôle de noeud source. A cet effet, les circuits virtuels de même nature (c'est-à-dire qui correspondent soit à du trafic local de transfert de fichier, soit à du trafic distant de transfert de fichier, soit à du trafic transactionnel), et à destination d'un même noeud, sont regroupés sur une même ligne virtuelle conformément au schéma représenté figure 3, et la mesure de trafic se fait par ligue virtuelle.

Dans un autre mode de réalisation il est toutefois possible de mettre en oeuvre une mesure de la charge individuelle des circuits virtuels pour lesquels le noeud joue le rôle de noeud source.

D'après la figure 3, la liaison L3 qui relie les noeuds N2 et N3 est composée de deux lignes virtuelles LV1 et LV2 respectivement dédiée au trafic transactionnel correspondant au circuit virtuel CV1 et au trafic local de transfert de fichier correspondant au circuits virtuels CV2 et CV3. La liaison L2 est composée d'une unique ligne virtuelle LV3 dédiée au trafic local de transfert de fichier correspondant au circuit virtuel CV5. Et la liaison L1 est composée de trois lignes virtuelles LV4, LV5 et LV6 respectivement dédiée au trafic transactionnel correspondant au circuit virtuel CV1, au trafic distant de transfert de fichier correspondant aux circuits virtuels CV2, CV3 et CV5, et au trafic local de transfert de fichier correspondant au circuit virtuel CV4.

Les noeuds N1, N2 et N3 surveillent donc chacun la charge engendrée par le trafic local de transfert de fichier, c'est-à-dire la charge sur la ligne virtuelle LV3 pour le noeud N1, sur la ligne virtuelle LV2 pour le noeud N2 et sur la ligne virtuelle LV6 pour le noeud N3.

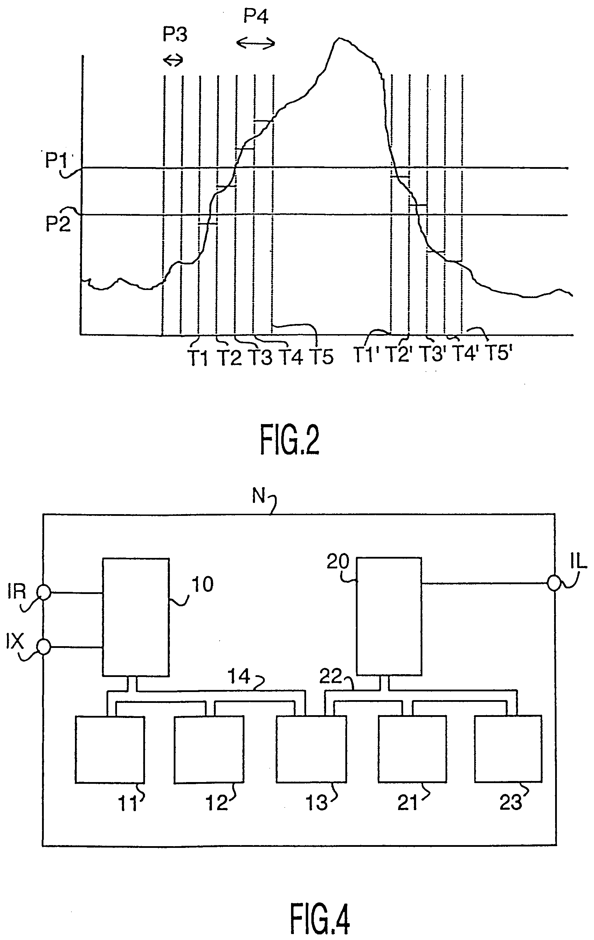

La figure 2 représente un graphe qui explicite le mode de calcul d'une telle charge. Pour chaque liaison, un ensemble de paramètres est défini à cet effet:
- un premier paramètre P1 appelé seuil haut, correspondant à un premier pourcentage du débit nominal de la liaison (80% par exemple), et au delà duquel un engorgement est détecté,
- un second paramètre P2 appelé seuil bas, correspondant à un second pourcentage du débit nominal de la liaison (40% par exemple), et en deçà duquel un désengorgement est détecté,
- un troisième paramètre P3, défini pour l'ensemble des lignes virtuelles d'un noeud, et appelé temps d'intégration qui indique la durée sur laquelle le calcul est effectué, et qui est par exemple égal à 20 secondes,
- un quatrième paramètre P4 dit de consolidation qui indique combien de fois consécutives un dépassement de seuil haut ou bas doit être détecté pour être confirmé, et qui est par exemple égal à 2.

Sur la figure 2, le temps est représenté en abscisse et la charge de la ligne en pourcentage du débit nominal de la liaison est porté en ordonnée. Entre les instants T1 et T2 distants de 20s la charge est inférieure au seuil bas P2. Entre les instants T2 et T3, la charge est comprise entre les seuils bas et haut P2 et P1. Entre les instants T3 et T4, puis entre les instants T4 et T5, elle est supérieure au seuil haut P1. L'engorgement de la ligne est ainsi détecté deux fois consécutives, et il est donc confirmé à l'instant T5.

De même, entre les instants T1' et T2', puis entre les instants T2' et T3', la charge est comprise entre les seuils haut et bas P1 et P2. Et entre les instants T3' et T4', puis T4' et T5', la charge est inférieure au niveau bas P2. Le désengorgement étant ainsi détecté deux fois consécutives, il est confirmé à l'instant T5'.

Lorsqu'un franchissement du seuil haut est confirmé, le noeud cherche à établir une liaison commutée avec le destinataire de la communication afin de basculer l'ensemble des communications sur cette liaison commutée et de fermer les circuits virtuels correspondants. Une telle liaison commutée entre le noeud source et le noeud destinataire des paquets est qualifiée de liaison de bout en bout. Dans certains cas, lorsque les deux extrémités de la liaisons (c'est-à-dire le serveur et l'utilisateur distant) ne sont pas capable de rétablir eux-même les circuits virtuels sur la liaison commutée, ce sont les noeuds extrémités qui s'en chargent.

Dans un autre mode de réalisation, il est également possible de ne basculer que certaines communications de la ligne virtuelle sur le réseau commuté.

De façon à effectuer ce basculement, chaque noeud est doté d'une table de routage préconfigurée qui associe les adresses des applications de transfert de fichier sur le réseau, les numéros des lignes virtuelles de sortie du noeud qui sont dédiées au trafic local de transfert de fichier correspondant, les numéros des accès commutés de secours utilisables à partir du noeud, et les adresses sur le réseau commuté du noeud destinataire. A titre d'exemple et en se référant à la figure 1, la table de routage préconfigurée du noeud N2 contient:
- l'adresse sur le réseau de l'applicatif de transfert de fichier, c'est-à-dire de la base de données A,
- le numéro de la ligue virtuelle LV2,
- le numéro S6 de l'accès au réseau commuté du noeud N2,
- et les adresses du noeud destinataire N4 sur le réseau commuté, c'est-à-dire les adresses sur le réseau commuté des accès S1, S2 et S3.

Ainsi, lorsqu'un engorgement est confirmé sur la ligue virtuelle LV2, le noeud établit une liaison commutée plus rapide (64kb/s pour un canal B RNIS contre 9600b/s pour un liaison spécialisée) avec le noeud destinataire N4 par l'intermédiaire d'un des accès S1, S2 ou S3, puis ferme le circuit virtuel CV2 de telle sorte que toute la capacité de la liaison spécialisé L3 reste disponible pour l'application transactionnelle correspondant à la ligne virtuelle LV1.

En revanche, dès qu'un désengorgement est confirmé sur cette liaison commutée, le noeud N2 rétablit le circuit virtuel CV2 vers le noeud N4 et ferme le liaison commutée.

La figure 4 représente un commutateur X25 selon l'invention, noté N. Un tel commutateur comporte au moins une interface réseau X25 notée IX et une interface RNIS notée IR qui sont reliées à un processeur d'applications 10 constitué par exemple par un 68360 de Motorola. Ce processeur 10 est lui-même relié par un bus 14 à une mémoire 11 de configuration du noeud. Le processeur 10 est également relié par ce bus 14 à une mémoire statique 12 qui contient les instructions de fonctionnement du processeur 10, notamment celles nécessaires à la mise en oeuvre de l'invention, et à une mémoire vive 13 contenant des données, et en particulier, pour chaque liaison du noeud, les différents paramètres nécessaires au calcul de la charge sur cette liaison, ainsi que ladite table de routage préconfigurée. Le noeud N est également doté d'une interface locale IL. A titre d'exemple, pour un réseau local Ethernet, cette interface est reliée à un contrôleur de communication 20, formé par exemple à partir d'un transmetteur Intel 82503 et d'un contrôleur Intel 82596DX. Ce contrôleur de communication 20 est lui même relié par un bus 22 à un processeur de communication 23, constitué par exemple par un T400 de Inmos, à une mémoire statique 21 contenant les instructions de fonctionnement du processeur de communication 23, et à la mémoire de donnes 13 précitée.

Il va de soi que des modifications peuvent être apportées au mode de réalisation qui vient d'être décrit, notamment par substitution de moyens techniques équivalents sans que l'on sorte pour cela du domaine de la présente invention.

En particulier la séparation des flux de données et la mesure de la charge sur une liaison peuvent être réalisées selon d'autres méthodes que celles décrites ici à titre d'exemple.

## Revendications

1. Système de transmission de données comportant une pluralité de noeuds (N1 à N4) reliés entre eux par des liaisons (L1 à L3) pour établir des communications relatives au moins à des applications de transfert de fichier et à des applications transactionnelles, certains de ces noeuds étant dotés d'au moins un accès à un réseau commuté (S1 à S7),
caractérisé en ce que chacun de ces noeuds comporte:
- des moyens de séparation de flux pour établir des communications distinctes pour des applications de transfert de fichier et pour des applications transactionnelles,
- des moyens pour former un groupe d'au moins une communication correspondant à une application locale de transfert de fichier,
- des moyens de mesure de la charge générée par ledit groupe,
- des moyens pour basculer au moins partiellement ledit groupe sur le réseau commuté lorsque ladite charge est supérieure à un niveau dit niveau haut (P1), et tant qu'elle reste supérieure à un niveau dit niveau bas (P2).

2. Système de transmission de données selon la revendication 1, caractérisé en ce que pour basculer au moins partiellement ledit groupe sur le réseau commuté, chacun desdits noeuds comporte:
- des moyens pour établir une connexion de bout en bout entre les noeuds source et destinataire,
- fermer les communications correspondantes,
- rétablir lesdites communications sur le réseau commuté.

3. Système de transmission de données selon l'une des revendications 1 ou 2, caractérisé en ce que lesdits moyens de séparation de flux utilisent comme critère de séparation l'adresse de destination des données.

4. Système de transmission de données selon l'une des revendications 1 à 3, caractérisé en ce que les moyens de mesure de la charge consistent:
- à mesurer la charge pendant un intervalle de temps prédéterminé,
- à détecter un dépassement de niveau haut ou de niveau bas lorsque ce résultat est confirmé un nombre de fois prédéterminé.

5. Noeud de réseau (N1 à N4) destiné à être utilisé dans un système de transmission de données comportant une pluralité de noeuds (N1 à N4) reliés entre eux par des liaisons (L1 à L3) pour établir des communications relatives au moins à des applications de transfert de fichier et à des applications transactionnelles, et doté d'au moins un accès à un réseau commuté (S1 à S7), caractérisé en ce qu'il comporte:
- des moyens de séparation de flux pour établir des communications distinctes pour des applications de transfert de fichier et pour des applications transactionnelles,
- des moyens pour former un groupe d'au moins une communication correspondant à une application locale de transfert de fichier,
- des moyens de mesure de la charge générée par ledit groupe,
- des moyens pour basculer au moins partiellement ledit groupe sur le réseau commuté lorsque ladite charge est supérieure à un niveau dit niveau haut (P1), et tant qu'elle reste supérieure à un niveau dit niveau bas (P2).

6. Commutateur (N) selon la revendication 5, destiné à être utilisé dans un réseau de commutation par paquet de type X25.
